# EUROPÄISCHE PATENTSCHRIFT

(11) **EP 0 470 408 B1**
(45) Veröffentlichungstag und Bekanntmachung des Hinweises auf die Patenterteilung: **12.10.1994**
(21) Anmeldenummer: 91111908.9
(22) Anmeldetag: 17.07.1991
(51) Int. Cl.: B60Q 1/115

(54) **Verfahren und Einrichtung zur Regelung der Leuchtweite eines Kraftfahrzeugs**
Method and device for controlling the high beam of a vehicle
Dispositif et procédé pour régler la portée de l'éclairage d'un véhicule

(30) Priorität: 06.08.1990 DE 4024915
(43) Veröffentlichungstag der Anmeldung: 12.02.1992
(73) Patentinhaber: Hella KG Hueck & Co., 59552 Lippstadt (DE)
(72) Erfinder: Hussmann, Micha, W-4780 Lippstadt (DE)

(56) Entgegenhaltungen:
- EP-A- 0 355 539

## Beschreibung

Die Erfindung betrifft ein Verfahren zur Regelung der Leuchtweite eines Kraftfahrzeugs, bei dem an einer Stelle der Vorderachse und an einer Stelle der Hinterachse Signale gemessen werden, die von der relativen Stellung der Fahrzeugkarosserie zu der Vorderachse und der Hinterachse abhängen, bei dem eine Differenzbildung der Signale von der Vorderachse und der Hinterachse durchgeführt wird, bei dem die sich ergebenden Differenzsignale als Sollwertsignale durch Mittelwertbildung gefiltert werden und bei dem Stellelemente in ihrer Lage geregelt werden, wenn das gefilterte Sollwertsignal von einem voreingestellten oder zuvor eingestellten Wert abweicht und eine Einrichtung zur Regelung der Leuchtweite eines Kraftfahrzeugs, entsprechend dem Oberbegriff des Anspruchs 2.

Eine Einrichtung und ein Verfahren zur Regelung der Leuchtweite eines Kraftfahrzeugs dieser Art ist aus der deutschen Offenlegungsschrift DE-OS 31 10 094 A1 bekannt.

Dieses Dokument bildet den Oberbegriff der Ansprüche 1 und 2.

Fühler, die die relative Stellung der Karosserie eines Kraftfahrzeugs zu den Fahrzeugachsen oder Fahrzeugrädern messen, sind an einen Analog-Multiplexer angeschlossen, der die von den Fühlern anliegenden Signale über einen Analog/Digital-Wandler einem Microprozessor zuführt. Eine Filterung der anliegenden Signale erfolgt, indem in einem festen Zeitabstand eine Mittelwertbildung der Signale durchgeführt wird. Dazu wird die Anzahl der einzubeziehenden Meßwerte vorgegeben. Aus den Mittelwerten wird dann für je ein Fühlerpaar, entsprechend einem Vorderachsgeber und einem Hinterachsgeber, ein Differenzsignal gebildet, das einem Scheinwerfereinstellwert entspricht. Jedes dieser Differenzsignale wird einem Digital/Analog-Wandler zugeführt, der über je einen nachgeschalteten Operationsverstärker mit einer Scheinwerferstelleinrichtung verbunden ist. In Abhängigkeit von dem Vorzeichen der Differenzsignale werden somit Stellelemente vor oder zurückbewegt und Scheinwerferlageregister im Microprozessor hoch oder heruntergezählt.

EP-A-0 355 539 zeigt eine ähnliche Einrichtung, die aber nur zwei Fühlern statt zwei Fühlerpaar beinhaltet.

Als nachteilig erweist sich hierbei, daß die Signale von den Fühlern an der Vorderachse unverzögert einer Differenzbildung und Filterung zugeführt werden, so daß Fahrbahnunebenheiten, die z. B. aus Schlaglöchern oder kurzen Wellen bestehen können, von dem Vorderachsfühler und dem Hinterachsfühler dem Filter oder dem Differenzbildner mit einer Zeitverzögerung zugeführt werden, die von dem Abstand der Vorderachse zu der Hinterachse und der Fahrgeschwindigkeit abhängt, die durch eine derartige Regelung, die eine Filterung aufweist, nicht ausgeregelt werden kann und die bei der Sollwertbildung für die Einstellwerte der Leuchtweite die Sollwerte verfälscht, so daß, um Fahrbahnunebenheiten dieser Art ausgleichen zu können und bei der Regelung der Leuchtweite möglichst fehlerfrei arbeiten zu können, eine große Filterzeitkonstante gewählt werden muß, die es nicht ermöglicht, alle entscheidenden Änderungen in der Neigung der Fahrzeugkarosserie durch ein Nachregeln der Leuchtweite der Scheinwerfer auszugleichen. Es werden somit Blendungen des Gegenverkehrs und/oder Sichtweiteverluste erzeugt, die zu gefährlichen Situationen bei dem Betrieb des Kraftfahrzeugs führen.

Der Erfindung liegt die Aufgabe zugrunde, eine Regelung der Leuchtweite für Kraftfahrzeuge zu schaffen, bei der auf einfache und kostengünstige Weise Fahrbahnunebenheiten bei der Differenzbildung der Signale von einem Vorderachsgeber und einem Hinterachsgeber bestmöglich herausgefiltert werden, bei der die Fahrzeugneigung einfach und zuverlässig bestimmt wird und die Leuchtweite bestmöglich geregelt wird.

Die Aufgabe wird bei dem Verfahren erfindungsgemäß dadurch gelöst, daß das Signal von der Vorderachse erst nach dem Ablauf einer Verzögerungszeit der Differenzbildung zugeführt wird, daß die Verzögerungszeit von dem Quotienten aus dem Achsabstand zwischen der Vorderachse und der Hinterachse und der Fahrgeschwindigkeit abhängt und daß das Sollwertsignal durch Bildung der Differenz aus dem Signal von der Hinterachse und dem verzögerten Signal von der Vorderachse erfolgt.

Die Aufgabe wird durch die Einrichtung dadurch gelöst, daß in der Verbindung zwischen dem Vorderachsgeber und dem Sollwertbildner eine Verzögerungseinrichtung angeordnet ist, daß die Verzögerungseinrichtung mit einem Geschwindigkeitssignalbildner verbunden ist, daß die Verzögerungseinrichtung einen Verzögerungszeitbildner aufweist, der den Quotienten aus dem Achsabstand zwischen der Vorderachse und der Hinterachse und der Fahrgeschwindigkeit bildet und daß die Verzögerungseinrichtung einen Ringspeicher aufweist, in dem die Signale von dem Vorderachsgeber bis zum Ablauf der jeweiligen Verzögerungszeit zwischengespeichert werden.

Dadurch, daß sowohl bei dem Verfahren als auch bei der Einrichtung das Signal des Vorderachsgebers geschwindigkeitsabhängig zeitlich verzögert dem Differenzbildner und damit der Differenzbildung zugeführt wird, ergibt sich der Vorteil, daß Fahrbahnunebenheiten, die z. B. aus Schlaglöchern oder kurzen Wellen in der Fahrbahn bestehen können und zu denen der Vorderachsgeber und der Hinterachsgeber geschwindigkeitsabhängig zeitversetzt Signale bilden, bei einem gleichzeitigen Zuführen zu dem Differenzbildner und einer gleichzeitigen Differenzbildung bestmöglich herausgefiltert werden, so daß kurzzeitige Neigungsänderungen der Fahrzeugkarosserie, die durch die Regelung der Leuchtweite bei Verwendung einer Filterung auch nicht ausgeglichen werden können, für die Bildung der gefilterten Sollwerte und damit für die Regelung der Leuchtweite nicht herangezogen werden.

Als besonders vorteilhaft erweist sich hierbei, daß kurzzeitige Neigungsänderungen der Fahrzeugkarosserie, die z. B. durch Schlaglöcher bewirkt werden, schon bei der Differenzbildung der Signale von dem Vorderachsgeber und dem Hinterachsgeber herausgefiltert werden, so daß für die Filterung nur solche Sollwertsignale verwendet werden, die auf ausregelbaren Änderungen in der Neigung der Fahrzeugkarosserie beruhen.

Desweiteren ergibt sich der Vorteil, daß die Filterzeiten bei der Mittelwertbildung durch den Filter verkürzt werden können, da die der Mittelwertbildung zugrundeliegenden Sollwertsignale nur noch die Neigungsänderungen der Fahrzeugkarosserie wiedergeben, die bei der Regelung der Leuchtweite zu berücksichtigen sind. In diesem Zusammenhang erweist sich als vorteilhaft, daß aufgrund der Verminderung der zu verarbeitenden Störsignale von den Gebern weniger Regel- und Stellvorgänge durch die Stellelemente zur Verstellung der Leuchtweite der Scheinwerfer vorgenommen werden müssen, was zu einer Erhöhung der Lebensdauer dieser Stellelemente führt.

Weiterhin erweist sich als vorteilhaft, daß bei dem Verfahren und der Einrichtung zur Regelung der Leuchtweite entsprechend dem Erfindungsgegenstand aufgrund der Herausfilterung von kurzzeitigen Fahrbahnunebenheiten schon bei der Differenzbildung der Gebersignale eine bessere Regelung der Leuchtweite als bei der vorbekannten Einrichtung erreicht wird, da Fehleinstellungen und damit eine Blendung des Gegenverkehrs oder Sichtweiteverluste, die zu gefährlichen Situationen im Straßenverkehr führen können, besser vermieden werden.

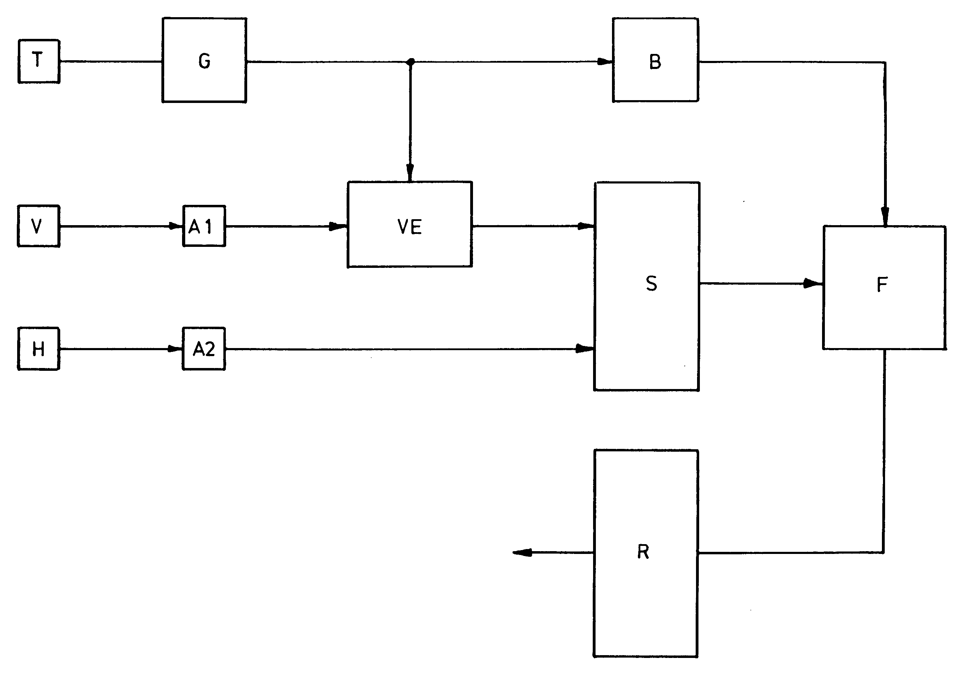

Ein Ausführungsbeispiel des Erfindungsgegenstands ist in der einzigen Zeichnung dargestellt und wird im folgenden anhand dieser Zeichnung näher beschrieben.

Die einzige Figur zeigt ein Blockschaltbild einer Ausführungsform des Erfindungsgegenstands. Ein Hinterachsgeber (H), der ein Signal erzeugt, das von der Stellung der Fahrzeugkarosserie zu der Hinterachse abhängt, ist elektrisch leitend mit einem zweiten Analog/Digital-Wandler (A2) verbunden, der das von dem Hinterachsgeber (H) anstehende analoge Signal in ein digitales Signal umwandelt. Der zweite Analog/Digital-Wandler (A2) ist elektrisch leitend mit einem Sollwertbildner (S) verbunden. Ein Vorderachsgeber (V), der entsprechend der Stellung der Fahrzeugkarosserie zu der Vorderachse analoge Signale bildet, ist elektrisch leitend mit einem ersten Analog/Digital-Wandler (A1) verbunden, der die analogen Signale von dem Vorderachsgeber (V) in digitale Signale umwandelt. Der erste Analog/Digital-Wandler (A1) ist elektrisch leitend mit einer Verzögerungseinrichtung (VE) verbunden, die die Weiterleitung der Signale von dem Vorderachsgeber (V) um eine Verzögerungszeit verzögert. Zur Berechnung der Verzögerungszeit ist die Verzögerungseinrichtung (VE) elektrisch leitend mit einem Geschwindigkeitssignalbildner (G) verbunden, der wiederum elektrisch leitend mit einem Tachosignalgeber (T) verbunden ist. Der Geschwindigkeitssignalbildner (G) bildet aus dem Tachosignal des Tachosignalgebers (T) ein Fahrgeschwindigkeitssignal, das der Verzögerungseinrichtung (VE) zugeführt wird. Die Verzögerungseinrichtung (VE) weist einen Verzögerungszeitbildner auf, der den Quotienten aus dem Achsabstand zwischen der Vorderachse und der Hinterachse und der Fahrgeschwindigkeit bildet. Zudem weist die Verzögerungseinrichtung (VE) einen Ringspeicher auf, in dem die Signale von dem Vorderachsgeber (V) bis zu dem Ablauf der jeweiligen Verzögerungszeit zwischengespeichert werden. Die Verzögerungseinrichtung (VE) ist elektrisch leitend mit dem Sollwertbildner (S) verbunden und leitet die Signale von dem Vorderachsgeber (V) nach Ablauf der jeweils berechneten Verzögerungszeiten dem Sollwertbildner (S) zu. Der Sollwertbildner (S) bildet Differenzsignale aus dem Signal von dem Hinterachsgeber (H) und dem verzögerten Signal von dem Vorderachsgeber (V). Der Sollwertbildner (S) kann dabei je nach Anforderung die gebildeten Differenzsignale mit einem Korrekturfaktor multiplizieren.

Der Sollwertbildner (S) ist elektrisch leitend mit einem Filter (F) verbunden und leitet dem Filter (F) die gebildeten Differenzsignale als Sollwertsignale zu. Der Filter (F) führt eine Mittelwertbildung der einlaufenden Sollwertsignale durch, wobei die Filterzeiten konstant oder variabel sein können. Bei dem hier gewählten Ausführungsbeispiel ist der Filter (F) elektrisch leitend mit einem Beschleunigungssignalbildner (B) verbunden.

Bei dem hier gewählten Ausführungsbeispiel werden dabei die Filterzeiten für die Mittelwertbildung mit zunehmender positiver oder negativer Beschleunigung des Kraftfahrzeugs auf kleinere Zeiten verringert und mit abnehmender positiver oder negativer Beschleunigung des Kraftfahrzeugs auf längere Zeiten vergrößert, so daß bei jeder Fahrsituation und jedem Betriebszustand des Fahrzeugs eine diesen Fahrsituationen und Betriebszuständen bestmöglich angepaßte Regelung der Leuchtweite mit unterschiedlichen Filterzeiten ermöglicht wird. Für eine besonders einfache und kostengünstige Ausführungsform ist der Beschleunigungssignalbildner (B) hier beispielhaft elektrisch leitend mit dem Geschwindigkeitsignalbildner (G) verbunden.

Der Filter (F), der hier beispielhaft durch Mittelwertbildung mit variablen Filterzeiten in Abhängigkeit von anstehenden Beschleunigungssignalen gefilterte Sollwertsignale bildet, ist elektrisch leitend mit einem Regler (R) verbunden. Aufgrund der gefilterten Sollwertsignale regelt der Regler (R) über die Einstellung von hier nicht gezeigten Stellelementen die Leuchtweite von Scheinwerfern des Kraftfahrzeugs.

Die Wirkungsweise des Verfahrens zur Regelung der Leuchtweite eines Kraftfahrzeugs wird anhand des zuvor gezeigten Ausführungsbeispiels einer Einrichtung zur Regelung der Leuchtweite eines Kraftfahrzeugs bschrieben.

Bei dem Betrieb des Kraftfahrzeugs erzeugen der Vorderachsgeber (V) und der Hinterachsgeber (H) kontinuierlich analoge Signale, die von der relativen Stellung der Fahrzeugkarosserie zu der Vorderachse und der Hinterachse abhängen. Diese Signale werden durch die Analog/Digital-Wandler (A1, A2) in digitale Signale umgewandelt, wobei die digitalisierten Signale von dem Hinterachsgeber (H) direkt dem Sollwertbildner (S) zur Differenzbildung zugeführt werden. Die digitalisierten Signale von dem Vorderachsgeber (V) werden durch eine Verzögerungseinrichtung um eine Verzögerungszeit verzögert dem Sollwertbildner (S) zur Differenzbildung zugeführt, wobei die Verzögerungszeit durch Bildung des Quotienten aus dem Achsabstand zwischen der Vorderachse und der Hinterachse und der Fahrgeschwindigkeit bestimmt wird. Das digitalisierte Signal von dem Vorderachsgeber (V) kann dabei beispielsweise in einem Ringspeicher abgespeichert werden, wobei dem jeweiligen Signal eine Adresse in dem Ringspeicher zugeordnet wird. Nach Ablauf der berechneten Verzögerungszeit wird dieses abgespeicherte Signal entsprechend der zu der Verzögerungszeit gehörenden Adresse im Ringspeicher dem Sollwertbildner (S) zur Differenzbildung zugeführt. Somit wird auf besonders einfache und kostengünstige Weise erreicht, daß Signale vom Vorderachsgeber (V) und Hinterachsgeber (H), die auf eine bestimmte Fahrbahnunebenheit, z. B ein Schlagloch, zurückzuführen sind, gleichzeitig der Differenzbildung unterworfen werden, wodurch alle kurzzeitig bedingten Fahrbahnunebenheiten schon bei der Differenzbildung herausgefiltert werden, so daß das durch die Differenzbildung gebildete Sollwertsignal nur durch solche Neigungsänderungen beeinflußt ist, die durch eine Regelung der Leuchtweite ausgeglichen werden sollen und können.

Als besonderer Vorteil erweist sich hierbei, daß die Filterzeiten kürzer gewählt werden können als bei herkömmlichen Regelungen, da die dem Filter zugeführten Sollwertsignale weniger Störsignale aufweisen, die durch die Mittelwertbildung ausgeglichen werden müßten. Zudem weist die Regelung der Leuchtweite weniger Unstetigkeiten und Nachstellvorgänge auf, so daß die Lebensdauer der Stellelemente erhöht werden kann.

## Patentansprüche

1. Verfahren zur Regelung der Leuchtweite eines Kraftfahrzeugs, bei dem an einer Stelle der Vorderachse und an einer Stelle der Hinterachse Signale gemessen werden, die von der relativen Stellung der Fahrzeugkarosserie zu der Vorderachse und der Hinterachse abhängen, bei dem eine Differenzbildung der Signale von der Vorderachse und der Hinterachse durchgeführt wird, bei dem die sich ergebenden Diffenzsignale als Sollwertsignale durch Mittelwertbildung gefiltert werden und bei dem Stellelemente in ihrer Lage geregelt werden, wenn das gefilterte Sollwertsignal von einem voreingegebenen oder zuvor eingestellten Wert abweicht, dadurch gekennzeichnet, daß das Signal von der Vorderachse erst nach dem Ablauf einer Verzögerungszeit der Differenzbildung zugeführt wird, daß die Verzögerungszeit von dem Quotienten aus dem Achsabstand zwischen der Vorderachse und der Hinterachse und der Fahrgeschwindigkeit abhängt und daß das Sollwertsignal durch Bildung der Differenz aus dem Signal von der Hinterachse und dem verzögerten Signal von der Vorderachse erfolgt.

2. Einrichtung zur Regelung der Leuchtweite eines Kraftfahrzeugs mit einem Vorderachsgeber, mit einem Hinterachsgeber, deren Ausgangssignale von der relativen Stellung der Fahrzeugkarosserie zu der Vorderachse und der Hinterachse abhängen, mit einem Sollwertbildner, der die Differenz der Signale von der Vorderachse zu denen von der Hinterachse bildet, mit einem Filter zur Mittelwertbildung der so gebildeten Sollwertsignale und mit einem Regler, der Stellelemente zum Einstellen der Leuchtweite von Scheinwerfern in Abhängigkeit von den gefilterten Sollwertsignalen in ihrer Lage regelt, dadurch gekennzeichnet, daß in der Verbindung zwischen dem Vorderachsgeber (V) und dem Sollwertbildner (S) eine Verzögerungseinrichtung (VE) angeordnet ist, daß die Verzögerungseinrichtung (VE) mit einem Geschwindigkeitssignalbildner (G) verbunden ist, daß die Verzögerungseinrichtung (VE) einen Verzögerungszeitbildner aufweist, der den Quotienten aus dem Achsabstand zwischen der Vorderachse und der Hinterachse und der Fahrgeschwindigkeit bildet und daß die Verzögerungseinrichtung (VE) einen Ringspeicher aufweist, in dem die Signale von dem Vorderachsgeber (V) bis zum Ablauf der jeweiligen Verzögerungszeit zwischengespeichert werden.

## Claims

1. Method for controlling the headlight range of a motor vehicle, wherein at one point on the front axle and at one point on the rear axle signals are measured which depend on the relative position of the vehicle body to the front axle and the rear axle, wherein a differential is generated from the signals from the front axle and rear axle, wherein the resulting differential signals are filtered as setpoint signals by averaging them, and wherein final controlling elements are controlled in respect of their position if the filtered setpoint signal deviates from a programmed or previously set value, characterised in that the signal from the front axle is only supplied for generation of the differential once a delay time has elapsed, that the delay time depends on the quotient derived from the wheelbase and the driving speed, and that the setpoint signal is produced by generating the differential of the signal from the rear axle and the delayed signal from the front axle.

2. Device for controlling the headlight range of a motor vehicle, having a front axle sensor, a rear axle sensor whose output signals depend on the relative position of the vehicle body to the front axle and rear axle, having a setpoint generator which generates the differential of the signals from the front axle and those from the rear axle, having a filter for averaging the setpoint signals so formed, and having a controller which controls the position of final controlling elements for setting the range of headlights in dependence on the filtered setpoint signals, characterised in that a delay device (VE) is arranged in the link between the front axle sensor (V) and the setpoint generator (S), that the delay device (VE) is connected to a speed signal generator (G), that the delay device (VE) incorporates a delay time generator which generates the quotient of the wheelbase and driving speed, and that the delay device (VE) incorporates a ring memory in which the signals from the front axle sensor (V) are stored temporarily until the respective delay time has elapsed.

## Revendications

1. Procédé pour la régulation de la distance d'éclairement d'un véhicule automobile, dans lequel, à un emplacement de l'essieu avant et à un emplacement de l'essieu arrière, des signaux sont mesurés, qui dépendent de la position relative de la carrosserie de véhicule par rapport à l'essieu avant et à l'essieu arrière, dans lequel, une formation de différence des signaux de l'essieu avant et de l'essieu arrière est exécutée, dans lequel, les signaux de différence résultants sont filtrés comme signaux de valeur de consigne par formation de valeur moyenne, et dans lequel, des éléments de réglage sont régulés dans leur position, lorsque le signal de valeur de consigne filtré s'écarte d'une valeur prédonnée ou d'une valeur ajustée préalablement, caractérisé en ce que le signal de l'essieu avant est amené seulement après l'écoulement d'un temps de retardement à la formation de différence, que le temps de retardement dépend du quotient de l'empattement et de la vitesse de marche, et en ce que le signal de valeur de consigne a lieu par formation de la différence du signal de l'essieu arrière et du signal retardé de l'essieu avant.

2. Agencement pour la régulation de la distance d'éclairement d'un véhicule automobile ayant un émetteur d'essieu avant, ayant un émetteur d'essieu arrière, dont les signaux de sortie dépendent de la position relative de la carrosserie de véhicule par rapport à l'essieu avant et à l'essieu arrière, ayant un dispositif de formation de valeur de consigne, qui forme la différence des signaux de l'essieu avant par rapport à ceux de l'essieu arrière, ayant un filtre pour la formation de valeur moyenne des signaux de valeur de consigne ainsi formés et ayant un régulateur, qui régule des éléments de réglage dans leur position, pour l'ajustement de la distance d'éclairement de projecteurs en fonction des signaux de valeur de consigne filtrés, caractérisé en ce qu'un agencement de retardement (VE) est agencé entre l'émetteur d'essieu avant (V) et le dispositif de formation de valeur de consigne (S), que l'agencement de retardement (VE) est relié avec un dispositif de formation de signal de vitesse (G), que l'agencement de retardement (VE) présente un dispositif de formation de temps de retardement, qui forme le quotient de l'empattement et de la vitesse de marche, et en ce que l'agencement de retardement (VE) présente une mémoire annulaire, dans laquelle les signaux de l'émetteur d'essieu avant (V) sont mis en mémoire temporairement jusqu'à l'écoulement, chaque fois, du temps de retardement.
